# EUROPÄISCHE PATENTSCHRIFT

(11) **EP 1 407 164 B1**
(45) Veröffentlichungstag und Bekanntmachung des Hinweises auf die Patenterteilung: **03.09.2008**
(21) Anmeldenummer: 02750912.4
(22) Anmeldetag: 10.05.2002
(51) Int. Cl.: F16F 1/12, B60G 15/06, B60G 11/14

(54) **Federanordnung**
Spring arrangement
Dispositif à ressort

(30) Priorität: 06.07.2001 DE 10132991
(43) Veröffentlichungstag der Anmeldung: 14.04.2004
(73) Patentinhaber: AUDI AG, 85045 Ingolstadt (DE)
(72) Erfinder: SCHRAMM, Karl, 85137 Pfalzpaint (DE); RÖDIG, Eberhard, 85084 Reichertshofen (DE)
(86) Internationale Anmeldenummer: PCT/EP2002/005132
(87) Internationale Veröffentlichungsnummer: WO 2003/004900

(56) Entgegenhaltungen:
- EP-A- 1 078 783
- EP-A- 1 191 249
- DE-A- 2 459 207
- DE-A- 3 625 101
- DE-A- 19 609 250
- FR-A- 2 463 327

## Beschreibung

Die Erfindung betrifft eine Federanordnung, gemäß der im Oberbegriff des Patentanspruches 1 angegebenen Art.

Insbesondere bei Radaufhängungen von Kraftfahrzeugen werden als Tragfedern häufig Schraubendruckfedern verwendet, die z. B. tonnenförmig ausgebildet sind und deshalb eine günstige progressive Kennung aufweisen. Nur beispielsweise wird auf die DE 196 09 250 C2 verwiesen.

Für eine komfortable Abstimmung des Federverhaltens des Kraftfahrzeuges sollte dabei der Progressionspunkt-das ist der Moment, in dem eine weitere Federwindung der Schraubendruckfeder an der korrespondierenden Federauflage zur Anlage kommt und der bei einer Vermessung bei der Kraft-Weg-Kennlinie zu einem knickartigen Anstieg der Kennlinie führt - außerhalb des Federbereiches liegen, der beim Befahren normaler, ebener Fahrbahnen wirksam ist. Dann federt das Kraftfahrzeug im Komfortbereich (Landstraßen, Autobahn) bei Geradeausfahrt weich, hingegen nimmt bei zunehmender Einfederung z. B. bei Kurvenfahrt und entsprechender Querneigung des Kraftfahrzeuges die Federrate progressiv zu.

Aufgrund von Fertigungstoleranzen, insbesondere der Schraubendruckfedern, liegt der besagte Progressionspunkt über den Einfederweg gesehen nicht immer gleich, so dass die gewünschte Abstimmung problematisch sein kann.

In der DE 36 25 101 A1 ist eine elastische Abstützung eines Fahrzeugrades an einer Kraftfahrzeugkarosserie offenbart. Die elastische Abstützung weist eine nichtlineare Schraubenfeder mit einem zylindrischen Abschnitt und wenigstens auf einer Seite daran angrenzend einen radial nach außen oder nach innen kegelstumpfförmigen Endbereich auf. Die Windungen des kegelstumpfförmigen Endbereiches stützen sich beim Einfedern nacheinander mit axialem Abstand nebeneinander liegend an der Mantelfläche eines kegelstumpfförmigen Federtellers ab. Die Mantelfläche des Federtellers ist etwa vom Durchmesser des zylindrischen Abschnittes der Schraubenfeder wie ihr kegelstumpfförmiger Endbereich radial nach außen oder nach innen, jedoch zur anderen Stirnseite der Schraubenfeder gerichtet.

Aus der DE 24 59 207 A1 ist ein elastisches Lager bekannt, insbesondere zur Lagerung eines Motors am Fahrgestell eines Kraftfahrzeuges. Das elastische Lager wird durch eine Metallfeder in Form einer konischen Wendelfeder und durch eine gegebenenfalls mit Metalleinlagen verstärkte Dämpfungszwischenlage mit einem Dämpfungskörper aus elastomeren Material gebildet, an der das radial größere Ende der Metallfeder aufliegt. Die Dämpfungszwischenlage ist auflageseitig, z.B. am Fahrgestell, angeordnet und durch einen das Auflageende der Metallfeder festhaltenden Elastomerring gebildet.

Dieser ist in einem Gehäuse angeordnet und spannt die Metallfeder sowohl in radialer als auch in axialer Richtung fest. Der Dämpfungskörper weist einen sich nach oben konisch verjüngenden, innerhalb der Metallfeder liegenden Hubbegrenzungskörper auf, auf dass eine Halterung des Motors beim Einfedern auftrifft und elastisch abgedämpft wird. Die konische Mantelfläche liegt dabei nicht an der Feder an.

Aufgabe der Erfindung ist es, eine Federanordnung gemäß der im Oberbegriff des Patentanspruches 1 angegebenen Art derart weiterzubilden, dass bei geringem Mehraufwand eine verbesserte Abstimmung der Federungseigenschaften erzielbar ist.

Diese Aufgabe wird mit den kennzeichnenden Merkmalen des Patentanspruches 1 in Verbindung mit seinen Oberbegriffsmerkmalen gelöst.

Die Unteransprüche bilden vorteilhafte Weiterbildungen der Erfindung.

Nach der Erfindung ist die Auflagefläche der Federauflage als eine ebene Fläche ausgebildet, die schräg zur Federlängsachse verlaufend ausgerichtet ist und die Federauflage weist einen von der Endwindung umringten axialen Ansatz auf. Der besagte Progressionspunkt wird dadurch einheitlich nach einem definierten Einfederweg erreicht. Damit können vorteilhaft Fertigungstoleranzen der Schraubendruckfedern ausgeglichen und eine im wesentlichen einheitliche Federrate erzielt werden.

Bevorzugt wird dabei so verfahren, dass die jeweilige Schraubendruckfeder vor deren Einbau z. B. in eine Radaufhängung eines Kraftfahrzeuges in einer Prüfvorrichtung mit neutralen Federauflagen vorgespannt und deren Kraft-Weg-Kennlinie ermittelt wird. Liegt der Progressionspunkt der betreffenden Feder hinsichtlich des Einfederweges zu früh oder zu spät, so werden entweder durch empirische Ermittlung oder durch Berechnung wie hinsichtlich ihrer Auflageflächen unterschiedlichen Federauflagen entsprechend zugeordnet. Erst dann werden die Schraubendruckfedern jeweils mit den zugeordneten Federauflagen in die Radaufhängung bzw. in das Kraftfahrzeug eingebaut.

Die Federauflagen sind mit zumindest zwei Auflageflächen für die Endwindung der Feder und für die zumindest zweite Federwindung unterschiedlich ausgebildet, in dem diese höhenversetzt zueinander sind. Damit wird quasi der Einsatzpunkt (= Progressionspunkt) der zweiten Federwindung der Schraubendruckfeder auf ein einheitliches Federungsverhalten abgestimmt. Der Versatz kann dabei in beiden Richtungen von z. B. + 10 mm bis gegen 0 und - 10 mm betragen.

Bevorzugt ist die Federauflage schräg zur Federmittelachse verlaufend geneigt bzw. bei einer rotationssymmetrischen Federauflage konisch. Der Konuswinkel α kann zwischen + oder - 30 Grad betragen.

Die Federauflagen können in an sich bekannter Weise einen elastischen Dämpfungsring aus Gummi oder Kunststoff tragen. Die Federauflagen können jedoch auch zur Vermeidung von Kontaktkorrosion mit einer schützenden Beschichtung versehen sein, z. B. durch Verzinken.

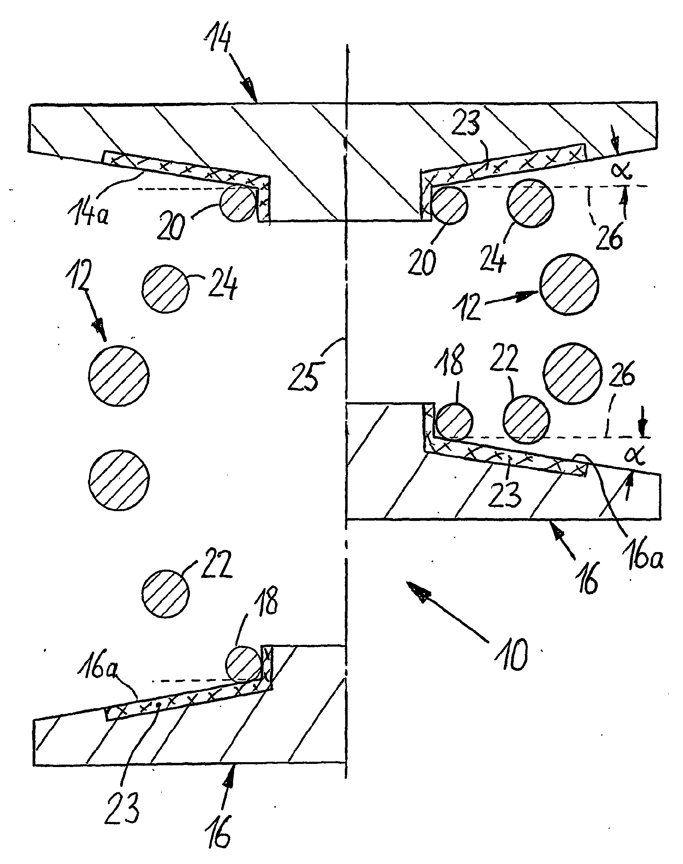

Ein Ausführungsbeispiel der Erfindung ist im folgenden mit weiteren Einzelheiten näher erläutert. Die schematische Zeichnung zeigt eine Schraubendruckfeder, die als Teil einer nicht dargestellten Radaufhängung eines Kraftfahrzeuges zwischen zwei Federauflagen angeordnet ist. Dabei zeigt die linke Hälfte der Zeichnung die Schraubendruckfeder in der ausgefederten Position und die rechte Hälfte die Schraubendruckfeder in einer teilweise eingefederten Position.

Die im Längsschnitt dargestellte Vorrichtung 10 weist eine tonnenförmige Schraubendruckfeder 12 auf, die zwischen zwei Federauflagen 14,16 eingespannt ist.

Dabei liegt die jeweils im Durchmesser verringerte Endwindung 18,20 unter Zwischenlage eines elastomeren Dämpfungsringes 23 an der Federauflage 14,16 an.

Die obere Federauflage 14 kann beispielsweise an der Karosserie des Kraftfahrzeuges (nicht dargestellt) ortsfest abgestützt sein, während die untere Federauflage an einem Lenker oder an einem Federbein einer Radaufhängung des Kraftfahrzeuges angeordnet sein kann.

In der linken Zeichnungshälfte ist die Schraubendruckfeder 12 (im weiteren als Feder bezeichnet) bzw. die Position der Federauflagen 14,16 in Konstruktionslage gezeichnet, d. h. in einer definierten Mittelstellung der nicht dargestellten Radaufhängung. Dabei liegen die jeweils zweiten, im Durchmesser größeren Federwindungen 22,24 und auch die weiteren Federwindungen nicht an den Federauflagen 14,16 an, wodurch definierte Federungseigenschaften (komfortabel, weich) gegeben sind.

Wird durch eine entsprechende Belastung bzw. Einfederung die Feder 12 in die in der rechten Zeichnungshälfte dargestellte Position vorgespannt, so würden bei einer üblichen, zur Federlängsachse 25 im wesentlichen senkrechten Gestaltung der Auflageflächen der Federauflagen 14,16 (vgl. gestrichelte Linie 26) die zweiten Federwindungen 22,24 bereits an den Federauflagen 14,16 anliegen und es wäre der Progressionspunkt (Anstieg der Federrate mit zunehmendem Gradienten) bereits erreicht.

Durch die konische Gestaltung der Federauflagen 14,16 und der Dämpfungsringe 23 unter dem Winkel α ergeben sich zur Senkrechten 26 schräge Auflageflächen 14a,16a, die den besagten Progressionspunkt wie ersichtlich auf eine geringere Höhe (Abstand der beiden Federauflagen 14,16 zueinander) verschieben.

Durch Variation der Winkel α an zumindest einer der Federauflagen 14,16, bevorzugt jedoch an beiden, kann der besagte Progressionspunkt in gewissem Ausmaß beliebig verschoben werden, in dem z. B. Federauflagen 14,16 mit unterschiedlichen Winkeln α von z. B. + 30 Grad (radial nach innen konvergierende Auflageflächen 14a,16a) bis 0 Grad (Senkrechte zur Längsachse 25) und von 0 Grad bis - 30 Grad (radial nach innen divergierende Aufnahmeflächen 14a,16a) bereitgestellt und nach Vermessung der Federn 12 zugeordnet und verbaut werden. Die Winkeldifferenzen können dabei jeweils 1 Grad oder mehr betragen.

### Bei der Montage der Federn 12 kann wie folgt Verfahren werden:

Die Federn 12 werden in eine Prüfvorrichtung (nicht dargestellt) mit Aufnahmen konform den Federauflagen 14,16 eingespannt, wobei diese Aufnahmen mit senkrecht zur Federlängsachse 25 gestalteten Aufnahmeflächen versehen sind.

Danach wird die Feder 12 zusammengespannt und es wird in bekannter Weise die Kraft-Weg-Kennlinie ermittelt bzw. der aus dem knickartigem Anstieg der Kennlinie erkennbare Progressionspunkt festgestellt. Über den zurückgelegten Einfederweg kann nun entweder empirisch oder durch entsprechende Berechnung festgelegt werden, welche Federauflagen 14,16 mit welchen Konuswinkeln α mit der vermessenen Feder 12 zu verbauen sind. Dies stellt unabhängig von Fertigungstoleranzen an den Federn 12 sicher, dass am Kraftfahrzeug ein im wesentlichen einheitlicher und von der Fahrwerksabstimmung her erwünschter Progressionspunkt der Federn 12 vorliegt.

Die Erfindung ist nicht auf das beschriebene Ausführungsbeispiel beschränkt. So können anstelle der Dämpfungsringe 22 die Federauflagen 14,16 bzw. deren Auflageflächen 14a,16a auch beschichtet, insbesondere verzinkt, ausgeführt sein. Ggf. können auch die Federwindungen 18,20 und/oder 22,24 mit einer Schutzschicht überzogen sein. An Stelle konusförmiger Auflageflächen 14a,16a können auch gestufte Auflageflächen mit entsprechenden Übergansbereichen an den Federauflagen 14,16 verwendet sein.

## Patentansprüche

1. Federanordnung mit einer Schraubendruckfeder (12) und mit zumindest einer Federauflage (14, 16) mit einer Auflagefläche (14a, 16a), an der die Schraubendruckfeder (12) mit einer Endwindung (18, 20) stirnseitig anliegt und beim Zusammendrücken der Schraubendruckfeder (12) zumindest eine weitere Federwindung (22, 24) zur Anlage kommt, insbesondere für Radaufhängungen in Kraftfahrzeugen, **dadurch gekennzeichnet, dass** die Auflagefläche (14a, 16a) der Federauflage (14, 16) als eine ebene Fläche ausgebildet ist, die schräg zur Federlängsachse (25) verlaufend ausgerichtet ist und dass die Federauflage (14, 16) einen von der Endwindung (18, 20) umringten axialen Ansatz aufweist.

2. Federanordnung nach Anspruch 1, **dadurch gekennzeichnet, dass** die Schraubendruckfeder (12) tonnenförmig ausgebildet ist und der Schraubendruckfeder (12) zwei Federauflagen (14, 16) zugeordnet sind.

3. Federanordnung nach den Ansprüchen 1 und 2, **dadurch gekennzeichnet, dass** die Endwindung (18, 20) einen kleineren Drahtdurchmesser aufweist als die weitere Federwindung (22, 24) .

4. Federanordnung nach einem der Ansprüche 1 bis 3, **dadurch gekennzeichnet, dass** die Federauflagefläche (14a, 16a) konisch gestaltet ist.

5. Federanordnung nach Anspruch 4, **dadurch gekennzeichnet, dass** der Konuswinkel zwischen bis +30 Grad oder -30 Grad beträgt.

6. Federanordnung nach einem der vorhergehenden Ansprüche, **dadurch gekennzeichnet, dass** die Federauflage (14,16) korrosionsgeschützt beschichtet, insbesondere verzinkt ist.

7. Federanordnung nach einem der vorhergehenden Ansprüche, **dadurch gekennzeichnet, dass** die Federauflage (14,16) im Bereich der Auflageflächen (14a,16a) einen Dämpfungsring (23) aus elastomeren Material trägt.

8. Federanordnung nach einem der vorhergehenden Ansprüche, **dadurch gekennzeichnet, dass** am anderen Ende der Schraubendruckfeder (12) eine Federauflage (14,16) entsprechend spiegelbildlich Ausgestaltung angeordnet ist.

## Claims

1. A spring assembly with a helical compression spring (12) and with at least one spring seat (14, 16) having a bearing surface (14a, 16a), against which an end turn (18, 20) of the helical compression spring (12) rests and against which, upon compression of the helical compression spring (12), at least one additional turn of the spring (22, 24) comes to rest, particularly for wheel suspensions in motor vehicles, **characterized in that** the bearing surface (14a, 16a) of the spring seat (14, 16) is formed as a flat surface oriented so as to extend at an angle to the longitudinal axis (25) of the spring, **and in that** the spring seat (14, 16) has an axial shoulder surrounded by the end turn (18, 20).

2. A spring assembly according to Claim 1, **characterized in that** the helical compression spring (12) is barrel-shaped and two spring seats (14, 16) are assigned to the helical compression spring (12).

3. A spring assembly according to Claims 1 and 2, **characterized in that** the end turn (18, 20) has a smaller diameter of wire than the additional turn (22, 24) of the spring.

4. A spring assembly according to one of Claims 1 to 3, **characterized in that** the bearing surface (14a, 16a) of the spring seat is conical in form.

5. A spring assembly according to Claim 4, **characterized in that** the cone angle is between up to +30 degrees and -30 degrees.

6. A spring assembly according to one of the preceding claims, **characterized in that** the spring seat (14, 16) is coated so as to be corrosion-proof and specifically is galvanized.

7. A spring assembly according to one of the preceding claims, **characterized in that,** in the region of the bearing surfaces (14a, 16a), the spring seat (14, 16) bears a damping ring (23) made of an elastomeric material.

8. A spring assembly according to one of the preceding claims, **characterized in that** a spring seat (14, 16) of corresponding mirror-image configuration is disposed at the other end of the helical compression spring (12).

## Revendications

1. Ensemble de ressort comprenant un ressort de pression à boudin (12) et au moins une butée de ressort (14, 16) dotée d'une surface de butée (14a, 16a), sur laquelle le ressort de pression à boudin (12) repose avec une spire extérieure (18, 20) côté frontal et vient en appui lors de la compression du ressort de pression à boudin (12), au moins une autre spire du ressort (22, 24), en particulier pour des suspensions de roue dans des véhicules automobiles, **caractérisé en ce que** la surface de butée (14a, 16a) de la butée de ressort (14, 16) est réalisée comme une surface plane qui est alignée s'étendant en biais par rapport à l'axe longitudinal du véhicule (25) et **en ce que** la butée de ressort (14, 16) présente un épaulement axial entouré par la spire extérieure (18, 20).

2. Ensemble de ressort selon la revendication 1, **caractérisé en ce que** le ressort de pression à boudin (12) est réalisé en forme de barillet et deux butées de ressort (14, 16) sont associées au ressort de pression à boudin (12).

3. Ensemble à ressort selon les revendications 1 et 2, **caractérisé en ce que** la spire extérieure (18, 20) présente un calibre de fil inférieur à celui de l'autre spire de ressort (22, 24).

4. Ensemble à ressort selon l'une quelconque des revendications 1 à 3, **caractérisé en ce que** la surface de butée du ressort (14a, 16a) est conçue en forme de cône.

5. Ensemble à ressort selon la revendication 4, **caractérisé en ce que** l'angle conique est compris entre +30° ou -30°.

6. Ensemble à ressort selon l'une quelconque des revendications précédentes, **caractérisé en ce que** la butée de ressort (14, 16) est revêtue de manière à être protégée de la corrosion, en particulier est galvanisée.

7. Ensemble à ressort selon l'une quelconque des revendications précédentes, **caractérisé en ce que** la butée de ressort (14, 16) porte dans la zone des surfaces de butée (14a, 16a) un anneau amortisseur (23) en matière élastomère.

8. Ensemble à ressort selon l'une quelconque des revendications précédentes, **caractérisé en ce qu'**à l'autre extrémité du ressort de pression à boudin (12) une butée de ressort (14, 16) est disposée dans une configuration symétrique correspondante.
